# EUROPEAN PATENT APPLICATION

(11) **EP 2 790 330 A1**
(43) Date of publication of application: **15.10.2014**
(21) Application number: 12856313.7
(22) Date of filing: 28.05.2012
(51) Int. Cl.: H04B 1/50

(54) **WIRELESS COMMUNICATION TRANSMITTING AND RECEIVING SYSTEM**

(30) Priority: 07.12.2011 CN 201110404205
(71) Applicant: Huizhou TCL Mobile Communication Co., Ltd., Hui Zhou Guangdong 516006 (CN)
(72) Inventor: BAI, Jian, Shanghai 201201 (CN)
(74) Representative: Brachmann, Roland W.
(86) International application number: PCT/CN2012/076154
(87) International publication number: WO 2013/082924

(57) **Abstract**

Disclosed is a wireless communication transmitting and receiving system, comprising a wireless transmitting and receiving unit, a receiving processing circuit, a transmitting processing circuit, a receiving aerial and a transmitting aerial, both the receiving processing circuit and the transmitting processing circuit are connected to the wireless transmitting and receiving unit; and the receiving aerial and the transmitting aerial are respectively connected to the receiving processing circuit and the transmitting processing circuit. The system requires no duplexer and can reduce insertion loss, thus lowering power consumption, and can reduce the maximum power needing to be outputted by a power amplifier, thus reducing heat dissipation of a terminal. The present invention also uses a dual-aerial structure where a transmitting channel is separated from a receiving channel and the two channels use respective aerials for communication; the separate aerials provides an isolation of approximately 10 dB, thus lowering the in-band noise receiving requirement for the transmitting channel.

## Description

### Technical Field

The present invention relates to the field of wireless communication, and in particular to a wireless communication transmitting and receiving system using a dual-aerial.

### Background

Existing 3G/4G FDD (Frequency Division Duplex) terminals use a design of full duplex, and so the transmitting channel and the receiving channel operate simultaneously. In a conventional radio frequency (RF) architecture, a duplexer is an essential device and mainly functions as follows: (1) converging a transmitting channel and a receiving channel into one channel; (2) providing separation between the transmitting channel and the receiving channel, i.e. attenuating noise of a RF signal of the transmitting channel at a receiving frequency band in order for it not to interfere with a receiving signal.

The reason of providing separation between the transmitting channel and the receiving channel is that the receiving channel is required to operate under a very weak condition (currently typically being -110dBm). However, the transmitting channel is a high power channel which can reach an intensity of 28dBm. Due to nonlinearity of a RF system, definitely there is very strong out-band stray under the condition of a 28dBm major wave. The stray will directly feed into the receiving terminal if not separated at the receiving frequency band, and the intensity thereof will be higher than received useful signals, thereby finally affecting receiving performances.

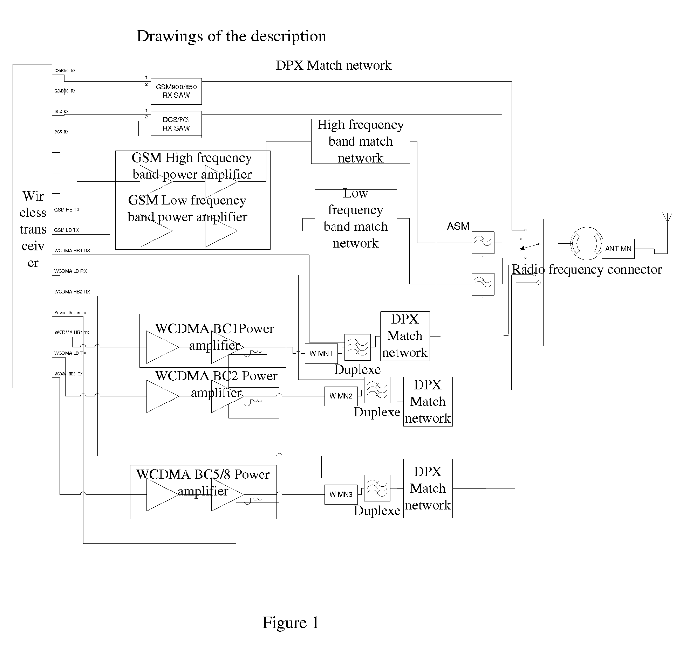

A typical RF structure of a FDD mobile terminal is shown in Figure 1. Taking a WCDMA FDD terminal as an example, we will analyze the design of its receiving system as follows.

The typical receiving sensitivity of an existing WCDMA terminal is -110dBm.

Wherein, the power of DPDCH (Dedicated Physical Data Channel) is -120.3dBm.

A channel coding rate for WCDMA sensitivity test is 12.2kbps, and an coding gain thereof is 10Xlg(3.84MHz/12.2) which is equal to 25dB.

A decoding threshold of QPSK modulation mode of WCDAMA is 5.2dB. A 2dB of margin is needed to be reserved, and so an input signal-to-noise ratio (SNR) of a demodulation module is required to be 7.2dB.

Therefore, noise at an input terminal of the demodulation module should be lower than:
-120.3 + 25 -7.2 = -102.5dBm/ 3.84MHz = -168.343dBm/Hz;

In view of the noise indicator of a receiver is typically 5dB, the noise at the input terminal of the demodulation module should be lower than -173.343dBm/Hz. And the thermal noise of the system
KBT = -200 + 26.022= -173.977dBm/Hz = -108.13dBm/3.84MHz;
wherein
K(Boltzmann constant) = 1.38x10-20mJ/K,
B = 3.84MHz (65.843dB),
T = 290 Kₒ

The output noise of an existing typical amplifier is -160dBm/Hz (output of wireless transceiver) + 28dB (typical amplification gain of amplifier at receiving frequency band) = -132dBm/Hz = -66.16 dBm/3.84MHz.

Therefore, a typical duplexer is required to provide at least isolation of
173.343 - 132 = 41dB.

Due to this large isolation provided, the insertion loss (IL) of an existing duplexer is larger, and is very large especially under the condition of high frequency and when the transmitting frequency band and the receiving frequency band are near. For example, the insertion loss of a duplexer used in WCDMA BC2 is over 2.5dB; the main reason is as follows: the transmitting frequency band is from 850MHz to1910MHz, while the receiving frequency band is from 1930MHz to1990MHz, and so it is very difficult to make a band-pass filter with a center of 1950MHz and a transition band of 20MHz only.

Such a large insertion loss will bring the following problems:
(1) Power consumption problem: under the condition of a large insertion loss, in order to have sufficient output power, the output power of the amplifier must be enhanced and accordingly the power consumption is inevitably increased.
(2) Heat dissipation problem: increase of output power of the power amplifier and increase of the power consumption inevitably result in larger heat. Heat of the power amplifier of the existing WCDMA terminal is very large, which will affect battery and user's experience.
(3) Cost problem: cost of a device with high technical indices is definitely high, resulting in a high cost of whole terminal.

### Summary of the invention

In order to improve the situation, the present invention provides a wireless communication transmitting and receiving system for solving the problem of the large insertion loss resulted from use of duplexer in prior art.

In order to achieve the above object, the wireless communication transmitting and receiving system implementing the present invention comprises a wireless transmitting and receiving unit, a receiving processing circuit, a transmitting processing circuit, a receiving aerial and a transmitting aerial, wherein both the receiving processing circuit and the transmitting processing circuit are connected to the wireless transmitting and receiving unit, and the receiving aerial and the transmitting aerial are respectively connected to the receiving processing circuit and the transmitting processing circuit.

Based on the above main features, wherein the receiving processing circuit includes a receiving surface acoustic wave filter and a single-pole five-throw switch. Wherein, the single-pole five-throw switch is connected to the receiving aerial. The received signal is transmitted to the single-pole five-throw switch.

According to the above main features, wherein the transmitting processing circuit includes a transmitting surface acoustic filter, a power amplifier, a low-pass filter, a single-pole five throw switch and a broadband coupler. Wherein the transmitting surface acoustic filter is connected to the wireless transmitting and receiving unit; then the signal is output to the power amplifier for amplification, output to a low-pass filter for filtering, output to the single-pole five- throw switch, and finally output to the transmitting aerial via the broadband coupler.

According to the above main features, the low-pass filter, the single-pole five-throw switch and the broadband coupler are integrated to be a whole.

As compared with prior art, the present invention does not use a duplexer and accordingly provides the following advantages:
(1) Lowering the insertion loss of the system and accordingly achieve the object of power consumption saving.
(2) Lowering the maximum power of the power amplifier needed to be output and accordingly achieve the object of lowering heat dissipation of the terminal.
(3) Modules at the front section such as amplifier, etc. can be integrated together without need of a duplexer using the process of surface acoustic filter. Meanwhile, the present invention also uses a dual-aerial structure where the transmitting channel is separated from the receiving channel and the two channels use respective aerials for communication; the separate aerials provide an isolation of approximately 10 dB, thus lowering the in-band noise receiving requirement for the transmitting channel.

### Brief description of the drawings

- Figure 1: is a RF structural diagram of a typical FDD mobile terminal.
- Figure 2: is a functional architectural diagram implementing a wireless transmitting and receiving system of the present invention.
- Figure 3: is an architectural diagram of discrete devices implementing a wireless communication transmitting and receiving system of the present invention.

### Detailed description of the invention

The embodiments of the present invention will be described in connection with the drawings as follows.

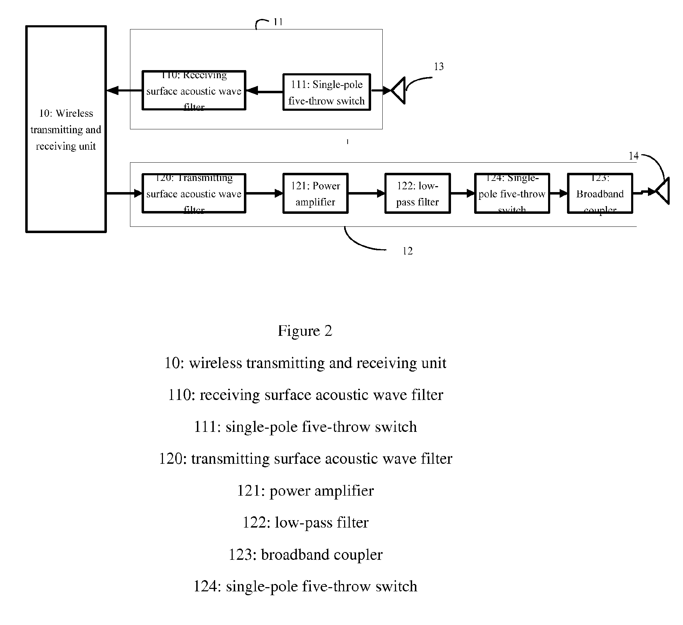

Referring to Figure 2, it shows a functional architectural diagram of a wireless transmitting and receiving system according to an implementation of the present invention. The wireless transmitting and receiving system comprises a wireless transmitting and receiving unit 10, a receiving processing circuit 11, a transmitting processing circuit 12, a receiving aerial 13 and a transmitting aerial 14. Wherein both the receiving processing circuit 11 and the transmitting processing circuit 12 are connected to the wireless transmitting and receiving unit 10, and the receiving aerial 13 and the transmitting aerial 14 are respectively connected to the receiving processing circuit 11 and the transmitting processing circuit 12.

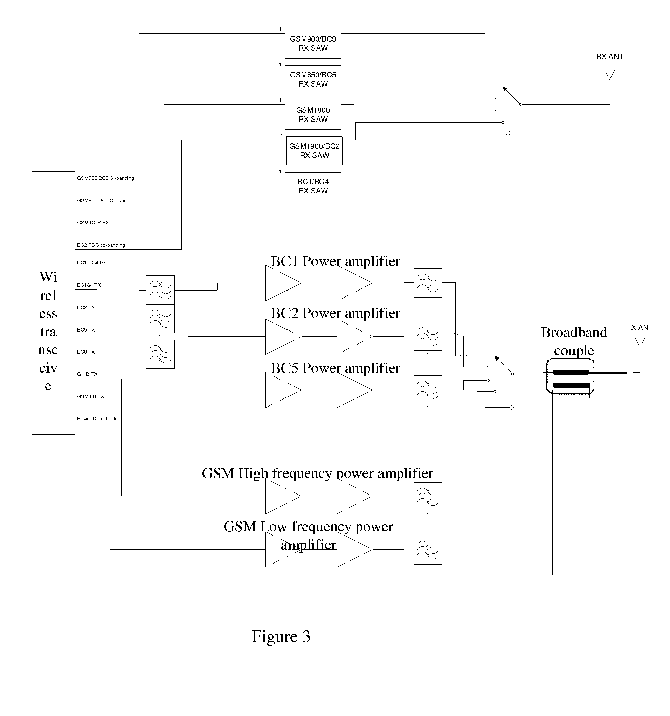

Referring to Figure 3, it shows an architectural diagram of discrete devices implementing a wireless communication transmitting and receiving system of the present invention. Wherein, the receiving processing circuit 11 comprises a receiving surface acoustic filter 110 and a single-pole five-throw switch 111. Wherein, the single-pole five-throw switch 111 is connected to a receiving aerial 13 and the received signal is transmitted to the single-pole five-throw switch 111. A plurality of receiving surface acoustic filters 110 are provided, which correspond to different receiving frequency bands. Signals received from the receiving aerial 13 are transmitted to different receiving surface acoustic filters 110 according to the settings of the system. Signals output from the receiving surface acoustic filters 110 are transmitted to the wireless transmitting and receiving unit for processing.

The transmitting processing circuit 12 comprises a transmitting surface acoustic filter 120, a power amplifier 121, a low-pass filter 122, a broadband coupler 123 and a single-pole five-throw switch 124. Wherein, the transmitting surface acoustic filter 120 is connected to the wireless transmitting and receiving unit 10; then the signal is output to the power amplifier 121 for amplification, output to a low-pass filter 122 for filtering, output to the single-pole five-throw switch 124, and finally output to the transmitting aerial 14 via the broadband coupler 123.

The operation frequency band of the wireless transmitting and receiving unit comprises 900MHz, 850MHz, 1800MHz and 1900MHz of global system for mobile communications (GSM) and 2100MHz of universal mobile telecommunications system (UMTS).

In addition, main parameter indicators of each device in Figure 3 are as follows:

For the wireless transmitting and receiving unit 10: its maximum output power is 7dBm; the minimum output power is -76dBm; noise at the receiving frequency band: -140dBm/Hz.

For the transmitting surface acoustic filter: its insertion loss is 2dB and attenuation of the receiving frequency band is 30dB.

For the power amplifier: the amplification gain at a high frequency band of the transmitting frequency band is 23dB, and the amplification gain at a low frequency band of the transmitting frequency band is 22dB. The high frequency receiving in-band amplification gain is 9dB, and the low frequency receiving in-band amplification gain is 8dB. The attenuation of gain from the transmitting frequency band to the receiving frequency band is 14dB, noise of total output of the receiving frequency band at a high frequency is -161dBm/Hz, and noise of total output of the receiving frequency band at a low frequency is -162dBm/Hz.

For the low-pass filter, the insertion loss at a high frequency is 0.8dB, and that at a low frequency is 0.5dB. Harmonic waves suppression is 25dB. Noise of the output of the receiving frequency band at a high frequency is -161.8dBm/Hz, and that at a low frequency is -162.5dBm/Hz.

For the single-pole five-throw switch, the insertion loss at a high frequency is 0.8dB, and that at a low frequency is 0.5dB. Noise of the output of the receiving frequency band at a high frequency band is -162.6dBm/Hz and that at a low frequency band is -163dBm/Hz.

The insertion loss of the broadband coupler is 0.3dB.

The insertion loss of the RF transmission line at a high frequency is 0.6dB and that at a low frequency is 0.2dB. Noise of the output of the receiving frequency band at a high frequency is -163.5dBm/Hz and that at a low frequency is -163.5dBm/Hz.

By means of the above arrangements in structure and corresponding configurations in parameter, that is, by means of separation of the transmitting aerial and the receiving aerial, the level of noise of the transmitting channel falling into the receiving terminal is -173.5dBm/Hz, thereby meeting the requirement of receiving performance of the whole system.

Moreover, technical indicators of the above various devices do not need to be implemented by selecting special modules. For the wireless transceiver, prior wireless transceivers can implement the technical indicators. A typical application is the wireless transceiver of Qualcomm platform such as RTR8600, 8615 and others, which can all achieve the above technical indicators.

The technical indicators of the transmitting surface acoustic filter can also be implemented by prior devices. For example, Murata, EPCOS and other manufacturers all provide products in batch for implementing the above indicators.

The technical indicators of the transmitting power amplifier can be implemented by products of PA manufacturers with CMOS technology (e.g. Javelin). CMOS technology can integrate inductances and capacitors into a power amplifier to filter the receiving frequency band, thereby achieving the effect.

The isolation of the dual-aerial can also be implemented. Products of existing aerial suppliers such as Skycross and ethertronics can implement the indicators.

In addition, in actual implementation, all of the low-pass filter, the single-pole five-throw switch and the broadband coupler in Figure 3 can be integrated into one chip, accordingly, on the one hand, the space can be saved, and on the other hand, the length of the RF transmission line can be saved to have the path between the output of the amplifier and the transmitting aerial as shorter as possible for further lowering the insertion loss.

The above architecture presents a solution of 3 frequency bands of WCDMA. If addition of a frequency band such as the one supported by 4G channel or other 3G FDDs is required, it only needs to add or reduce the number of ports of aerial switches. The configuration of each transmitting channel is almost the same. The specific operation principle thereof will not be described in detail herein.

As compared with prior art, the RF architecture of the FDD terminal provided by the present invention may not use a duplexer, and so provides the following advantages: (1) lowering the insertion loss of the system and accordingly achieve the purpose of power consumption saving; (2) lowering the maximum power of the power amplifier needed to be output and accordingly achieving the purpose of lowering heat dissipation of the terminal; (3) modules at the front section such as amplifier, etc. can be integrated together without need of a duplexer using the process of surface acoustic filter.

And, the present invention uses a dual-aerial structure where a transmitting channel is separated from a receiving channel and the two channels use respective aerials for communication; the separate aerials provides an isolation of approximately 10 dB, thus lowering the in-band noise receiving requirement for the transmitting channel.

It can be understood that those skilled in the art may make equivalent substitutions or modifications based on the technical solution of the present invention and the concept of the invention while all of the substitutions or modifications belong to the scope of protection of the appended claims.

## Claims

1. A wireless communication transmitting and receiving system comprising a wireless transmitting and receiving unit, a receiving processing circuit, a transmitting processing circuit, a receiving aerial and a transmitting aerial, wherein
- both the receiving processing and the receiving processing circuit are connected to the wireless transmitting and receiving unit;
- the receiving aerial is connected to the receiving processing circuit;
- the transmitting aerial is connected to the transmitting processing circuit;
- the receiving processing circuit comprises a receiving surface acoustic filter and a single-pole five-throw switch, wherein the single-pole five-throw switch is connected to the receiving aerial, and a received signal is transmitted to the single-pole five-throw switch;
- the transmitting processing circuit comprises a transmitting surface acoustic filter, a power amplifier, a low-pass filter, a single-pole five-throw switch and a broadband coupler, wherein the transmitting surface acoustic filter is connected to the wireless transmitting and receiving unit, then a signal is output to the power amplifier for amplification, output to the low-pass filter for filtering, output to the single-pole five-throw switch, and finally output to the transmitting aerial via the broadband coupler.

2. The wireless communication transmitting and receiving system as claimed in claim 1, **characterized in that** the low-pass filter, the single-pole five-throw switch and the broadband coupler are integrated into a whole.

3. The wireless communication transmitting and receiving system as claimed in claim 2, **characterized in that** the low-pass filter, the single-pole five-throw switch and the broadband coupler are integrated into one chip.

4. The wireless communication transmitting and receiving system as claimed in claim 1, **characterized in that** the receiving surface acoustic filter of the system comprises a plurality of receiving surface acoustic filters corresponding to different receiving frequency bands.

5. The wireless communication transmitting and receiving system as claimed in claim 1, **characterized in that** an insertion loss of the single-pole five-throw switch at a high frequency is 0.8dB and an insertion loss of the single-pole five-throw switch at a low frequency is 0.5dB.

6. A wireless communication transmitting and receiving system comprising a wireless transmitting and receiving unit, a receiving processing circuit, a transmitting processing circuit, a receiving aerial and a transmitting aerial, wherein
- both the receiving processing and the receiving processing circuit are connected to the wireless transmitting and receiving unit;
- the receiving aerial is connected to the receiving processing circuit;
- the transmitting aerial is connected to the transmitting processing circuit;
- the receiving processing circuit comprises a receiving surface acoustic filter and a single-pole five-throw switch, wherein the single-pole five-throw switch is connected to the receiving aerial, and a received signal is transmitted to the single-pole five-throw switch.

7. The wireless communication transmitting and receiving system as claimed in claim 6, **characterized in that** the low-pass filter, the single-pole five-throw switch and the broadband coupler are integrated into a whole.

8. The wireless communication transmitting and receiving system as claimed in claim 7, **characterized in that** the low-pass filter, the single-pole five-throw switch and the broadband coupler are integrated into one chip.

9. The wireless communication transmitting and receiving system as claimed in claim 6, **characterized in that** the receiving surface acoustic filter of the system comprises a plurality of receiving surface acoustic filters corresponding to different receiving frequency bands.

10. The wireless communication transmitting and receiving system as claimed in claim 6, **characterized in that** an insertion loss of the single-pole five-throw switch at a high frequency is 0.8dB and an insertion loss of the single-pole five-throw switch at a low frequency is 0.5dB.

11. A wireless communication transmitting and receiving system comprising a wireless transmitting and receiving unit, a receiving processing circuit, a transmitting processing circuit, a receiving aerial and a transmitting aerial, wherein
- both the receiving processing and the receiving processing circuit are connected to the wireless transmitting and receiving unit;
- the receiving aerial is connected to the receiving processing circuit; and
- the transmitting aerial is connected to the transmitting processing circuit.

12. The wireless communication transmitting and receiving system as claimed in claim 11, **characterized in that** the low-pass filter, the single-pole five-throw switch and the broadband coupler are integrated into a whole.

13. The wireless communication transmitting and receiving system as claimed in claim 12, **characterized in that** the low-pass filter, the single-pole five-throw switch and the broadband coupler are integrated into one chip.

14. The wireless communication transmitting and receiving system as claimed in claim 9, **characterized in that** the receiving surface acoustic filter of the system comprises a plurality of receiving surface acoustic filters corresponding to different receiving frequency bands.

15. The wireless communication transmitting and receiving system as claimed in claim 11, **characterized in that** an insertion loss of the single-pole five-throw switch at a high frequency is 0.8dB and an insertion loss of the single-pole five-throw switch at a low frequency is 0.5dB.
